# FASCICULE DE BREVET EUROPEEN

(11) **EP 1 000 728 B1**
(45) Date de publication et mention de la délivrance du brevet: **03.07.2002**
(21) Numéro de dépôt: 99122239.9
(22) Date de dépôt: 08.11.1999
(51) Int. Cl.: B29C 45/14, B29C 45/44

(54) **Fabrication d'un appui**
Herstellung eines Stützkörpers
Manufacturing a support body

(30) Priorité: 12.11.1998 FR 1424398
(43) Date de publication de la demande: 17.05.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Lacour, Jean-Charles, 63000 Clermont-Ferrand (FR); Voisin, Didier, 71140 Bourbon Lancy (FR)
(74) Mandataire: Bauvir, Jacques

(56) Documents cités:
- EP-A- 0 721 854
- EP-A- 0 796 747
- US-A- 3 813 197
- US-A- 4 000 240

## Description

La présente invention se rapporte à la fabrication de bandages élastiques comme des appuis utilisés à l'intérieur de pneumatiques pour supporter la charge en cas de crevaison. Plus précisément, elle concerne la fabrication des appuis comportant à leur base une ceinture sensiblement inextensible réalisée au moyen de fils de renforcement du genre de ceux renforçant usuellement les pneumatiques.

La demande de brevet EP 0 796 747 décrit un exemple particulier d'un tel appui. A la figure 1 de la demande de brevet EP 0 796 747, on voit que la base 10 de l'appui est renforcée par des fils 11 disposés sensiblement à zéro degré par rapport à un plan perpendiculaire à l'axe de rotation de l'appui.

Dans la présente demande, on entend par " fil ", aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage ou préencollage pour favoriser l'adhésion sur le caoutchouc. On entend par " zéro degré " un angle mesuré par rapport à la direction circonférentielle, c'est à dire par rapport à un plan perpendiculaire à l'axe de rotation du support, reprenant ainsi les conventions usuelles pour les pneumatiques. Il est dit que l'angle vaut " sensiblement " zéro degré parce que le renforcement permettant de s'opposer à la centrifugation du support est réalisé par bobinage d'un fil ou d'une bandelette de fils parallèles, avec un certain pas de pose, d'où il résulte que l'angle ne vaut pas zéro degré stricto sensu, mais est en pratique au moins localement légèrement supérieur à zéro degré pour pouvoir balayer toute la largeur voulue.

Un matériau convenable pour réaliser un tel appui est le caoutchouc.

On connaît différentes techniques de fabrication d'un objet moulé : moulage par compression, moulage transfert, moulage par injection. Le moulage par compression suppose l'introduction du volume de caoutchouc nécessaire à l'intérieur du moule avant de le fermer, alors que le moulage par transfert et le moulage par injection supposent tous deux la fermeture du moule avant l'introduction du volume de caoutchouc nécessaire dans celui-ci. Le choix dépend notamment des séries projetées, le moulage par injection, plus coûteux en investissement initial, s'avérant d'un coût marginal plus bas, et permettant une pression et une température de matière plus uniformes pendant la réaction de vulcanisation, et permettant d'atteindre une plus grande qualité géométrique.

Mais l'injection, ainsi que le transfert, se prêtent mal aux produits non homogènes, qui sont renforcés par des renforcements flexibles. En particulier, ces procédés impliquant l'introduction de matière dans un moule fermé sont mal adaptés lorsque le renforcement est une nappe de fils car les fils ne se tiennent pas, ou très mal, dans le moule. Le caoutchouc refoulé dans le moule entraîne avec lui les fils lorsqu'il remplit le moule. Il est donc très problématique d'assurer un positionnement précis des fils dans l'appui vulcanisé. C'est pourquoi on ne retient pas le refoulement de caoutchouc dans un moule fermé pour les pièces en caoutchouc renforcées par des fils. Il est par exemple bien connu que les pneumatiques ne sont pas injectés ; on réalise d'abord une ébauche crue à une forme assez proche de la forme finale de fabrication du pneumatique, l'ébauche comportant les fils de renforcement insérés à l'endroit voulu entre les différentes couches de caoutchouc, puis on assure le moulage en refermant autour de l'ébauche les éléments moulants nécessaires.

L'objectif de l'invention est de fabriquer un appui tel que celui décrit dans la demande de brevet EP 0 796 747 par refoulement de matière dans un moule préalablement fermé, tout en garantissant que la position des fils de renfort voulue par le concepteur de l'appui est parfaitement respectée.

L'invention propose un procédé de fabrication d'un appui destiné à être monté sur une jante de véhicule, ledit appui ayant un axe de rotation, une base limitée par une face radialement intérieure sensiblement cylindrique destinée à être montée autour de ladite jante, un sommet destiné à supporter la charge et un corps reliant ladite base audit sommet, ladite base comprenant un renforcement circonférentiel sensiblement inextensible, la face radialement extérieure dudit sommet ayant une forme s'écartant de la forme cylindrique, le corps comportant une pluralité d'évidements axiaux débouchant d'un côté au moins dudit appui,
ledit procédé de fabrication utilisant un moule ayant un axe correspondant audit axe de rotation, ledit moule comprenant :
- un noyau intérieur assurant le moulage de ladite face radialement intérieure,
- un anneau de moulage du sommet, ledit anneau comprenant au moins deux parties séparables radialement l'une par rapport à l'autre, lesdites parties séparables permettant de mouler ladite face radialement extérieure dudit sommet,
- au moins une coquille comportant une pluralité de doigts axiaux pour mouler latéralement ledit corps et lesdits évidements, ledit noyau, ledit anneau et ladite coquille coopérant pour définir au moins partiellement une cavité fermée pour mouler ledit appui,
ledit noyau comprenant au moins deux pièces constitutives et étant susceptible de prendre une configuration de moulage dans laquelle ses pièces constitutives forment une surface de moulage continue circonférentiellement pour mouler ladite face radialement intérieure, la surface de moulage étant définie par un diamètre de référence φ correspondant sensiblement au diamètre intérieur dudit appui, ledit noyau étant également susceptible de prendre une configuration de démoulage de forme différente de la configuration de moulage, définie par une longueur d'enveloppe E autour de ladite surface de moulage inférieure au produit du nombre π et du diamètre de référence φ, ledit procédé de fabrication comprenant les étapes suivantes :
- préfabriquer un anneau comportant ledit renforcement circonférentiel,
- établir la configuration de démoulage dudit noyau,
- installer ledit anneau sur ledit noyau,
- établir la configuration de moulage dudit noyau,
- fermer le moule puis refouler sous pression dans ledit moule une matière élastique à l'état final et injectable
- écarter axialement ladite coquille comprenant des doigts axiaux, au moins partiellement, relativement par rapport à au moins l'un des composants que sont l'anneau de moulage et le noyau,
- puis établir la configuration de démoulage dudit noyau et écarter radialement lesdites parties de l'anneau de moulage du sommet,
- évacuer ledit appui.

Dans le contexte de la présente invention, on assimilera à un appui, accessoire destiné à être monté à l'intérieur d'un pneumatique pour lui conférer un mode de fonctionnement temporaire à pression nulle, un bandage non pneumatique conçu pour être utilisé seul en service normal, les adaptations de choix des matériaux constitutifs et/ou de dessin de l'objet lui-même n'étant pas le propos de la présente demande de brevet. Autrement dit, la présente invention n'est pas limitée à une destination précise de l'objet. Elle trouve avantage à être appliquée chaque fois que le moulage et/ou le démoulage est rendu assez difficile par exemple parce que l'objet fabriqué est renforcé notamment par des fils. Elle n'est pas limitée à un matériau particulier, pourvu que le matériau réponde aux besoins de l'appui en termes de caractéristiques à l'état final et, pour la phase de fabrication, pourvu qu'il puisse être refoulé à l'intérieur d'un moule fermé au travers de canalisations ad hoc.

L'invention propose d'utiliser le refoulement sous pression dans une cavité de moulage fermée, en combinaison avec un noyau intérieur en plusieurs pièces, alors qu'on utilise généralement des noyaux en une seule pièce lorsqu'on utilise l'injection ou le transfert, car dans ce cas la fermeture du moule ne pose pas de problème puisqu'elle est préalable à son remplissage, et le démoulage du produit s'accommode en général fort bien de quelques mises en tension de celui-ci, puisqu'il est à un stade réticulé ou vulcanisé, donc jouissant de bonnes propriétés mécaniques. Ainsi, l'invention utilise par exemple un noyau en plusieurs pièces pour mouler un appui dont la face radialement intérieure est directement ou facilement démoulable, même hors d'un noyau monobloc, ladite face radialement intérieure formant une surface présentant par rapport à une surface démoulable parallèlement à l'axe de rotation des déviations ne dépassant pas quelques millimètres. De façon plus générale, ledit noyau présente une configuration de moulage et une configuration de démoulage, de forme différente de la précédente, facilitant non seulement le démoulage mais facilitant aussi l'installation d'un anneau sous la forme d'une ceinture inextensible sur le noyau, au démarrage de la fabrication d'un appui.

L'invention s'étend aussi à un moule adapté pour mettre en oeuvre l'invention au moyen par exemple d'une machine d'injection classique pour caoutchouc, du genre de celles commercialisées sous la dénomination " REP ".

Selon l'invention, le moule, présentant un axe correspondant à l'axe de rotation de l'appui à mouler, pour le moulage d'un appui destiné à être monté sur une jante de véhicule, ledit appui ayant un axe de rotation, une base ayant une face radialement intérieure sensiblement cylindrique destinée à être montée autour de ladite jante, un sommet destiné à supporter la charge et un corps reliant ladite base audit sommet, ladite base comprenant un renforcement circonférentiel sensiblement inextensible, ledit moule ayant un axe correspondant audit axe de rotation, ledit moule comprenant un noyau intérieur assurant le moulage de ladite face radialement intérieure, ledit moule comprenant d'autres pièces créant avec ledit noyau une cavité fermée pour mouler ledit appui, ledit noyau étant constitué par au moins deux pièces de moulage séparables, l'une des pièces comportant un secteur de moulage allant circonférentiellement d'un premier bord à un second bord et définissant partiellement la surface de moulage de ladite face radialement intérieure, ledit secteur de moulage étant prolongé, directement ou indirectement, par une interface allant dudit premier bord audit second bord et passant par l'intérieur du noyau, ladite interface formant une ou plusieurs portées engendrées par une droite translatée parallèlement à elle-même et inclinée selon un premier angle par rapport à l'axe du moule, lesdites pièces de moulage étant susceptibles de prendre une configuration de moulage dans laquelle lesdites pièces forment une surface de moulage continue circonférentiellement, définie par un diamètre de référence φ correspondant sensiblement au diamètre intérieur dudit appui, et une configuration de démoulage par glissement d'une pièce sur une autre pièce le long de ladite interface, ladite configuration de démoulage ayant une longueur d'enveloppe E inférieure au produit du nombre π et du diamètre de référence φ.

De préférence, la ou toutes les portées à l'interface ou aux interfaces entre pièces rigides est ou sont planes afin d'en faciliter l'usinage. Bien qu'un noyau à deux pièces seulement, dont l'interface est un plan incliné par rapport à l'axe, puisse se rétreindre par glissement axial relatif en maintenant lesdites pièces en contact l'une sur l'autre, afin de procurer une configuration de démoulage qui permet d'enfiler par-dessus un anneau inextensible, on utilise de préférence un noyau comportant au moins trois pièces rigides séparables. De préférence également, le noyau comporte un plan de symétrie contenant ledit axe du moule.

La description suivante illustre un mode préféré de réalisation de l'invention. Aux différentes figures, on voit :
- à la figure 1, un moule selon un premier mode de réalisation de l'invention, installé dans une presse d'injection, en configuration de fermeture,
- à la figure 2, le noyau utilisé dans le premier mode de réalisation de l'invention, en configuration de fermeture,
- à la figure 3xo, le noyau du premier mode de réalisation, dans une configuration initiale, vu dans le même plan de coupe que celui de la figure 1, la lettre " x " rappelant qu'il s'agit d'une coupe selon XX à la figure 2, la lettre " o " rappelant que le noyau est ouvert,

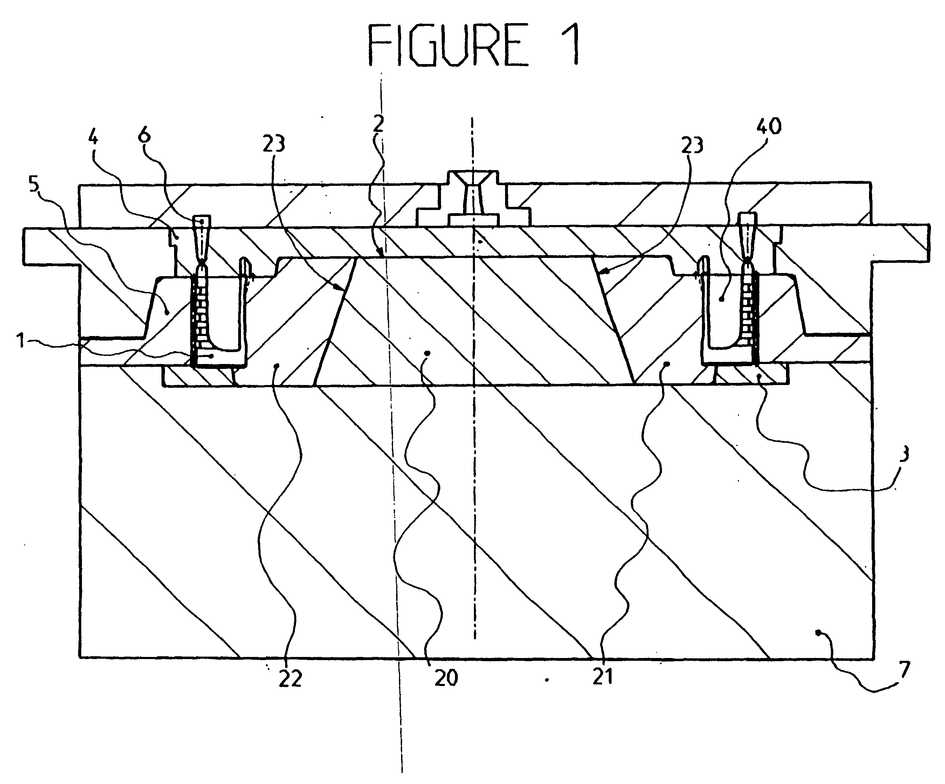

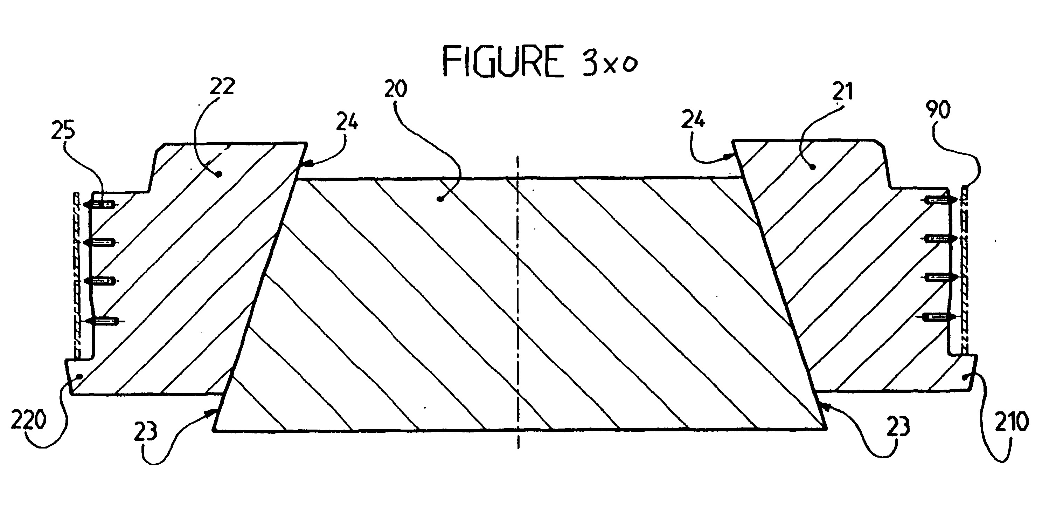

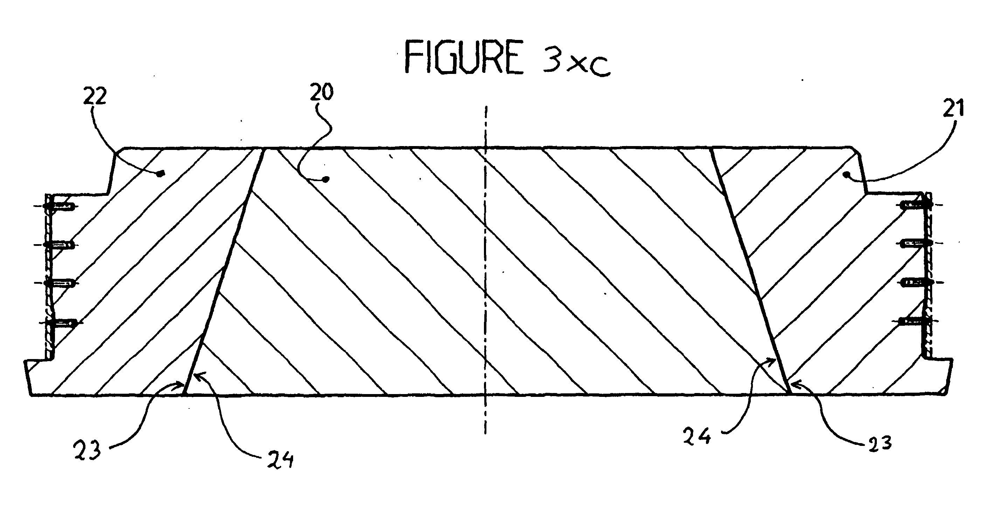

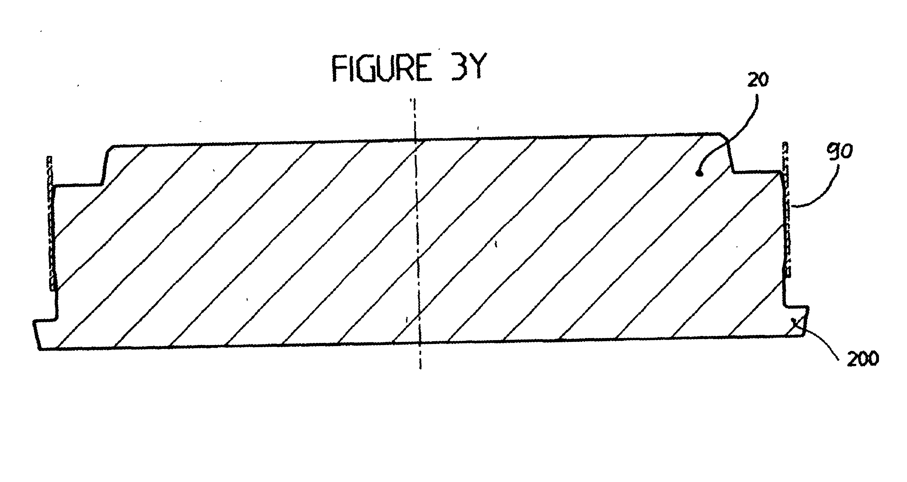

- à la figure 3xc, le noyau dans une configuration ultérieure, vu dans le même plan de coupe que celui de la figure 1, la lettre " c " rappelant que le noyau est fermé,

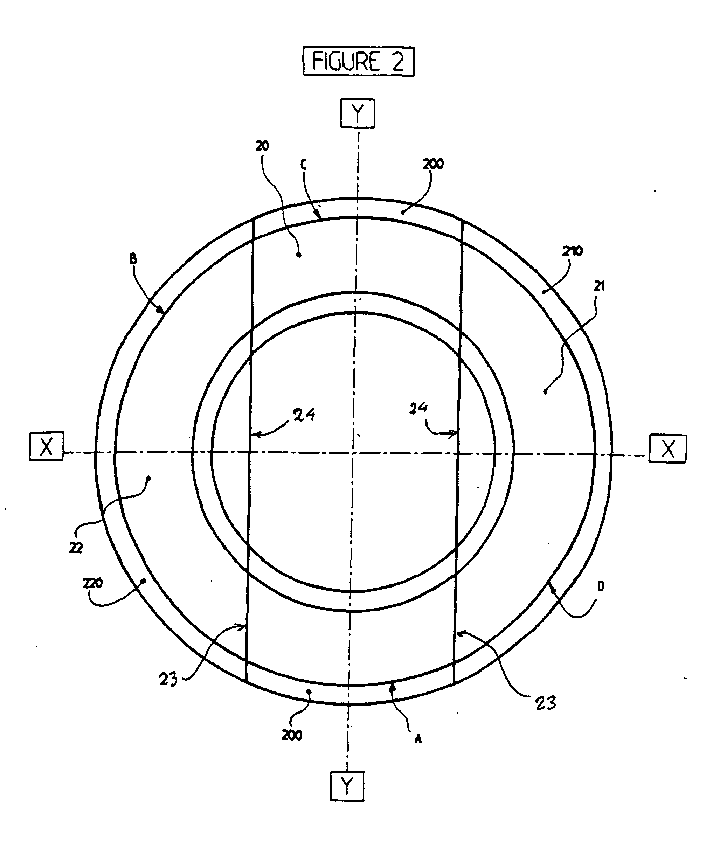

- à la figure 3y, le noyau vu dans le plan de coupe YY à la figure 2,

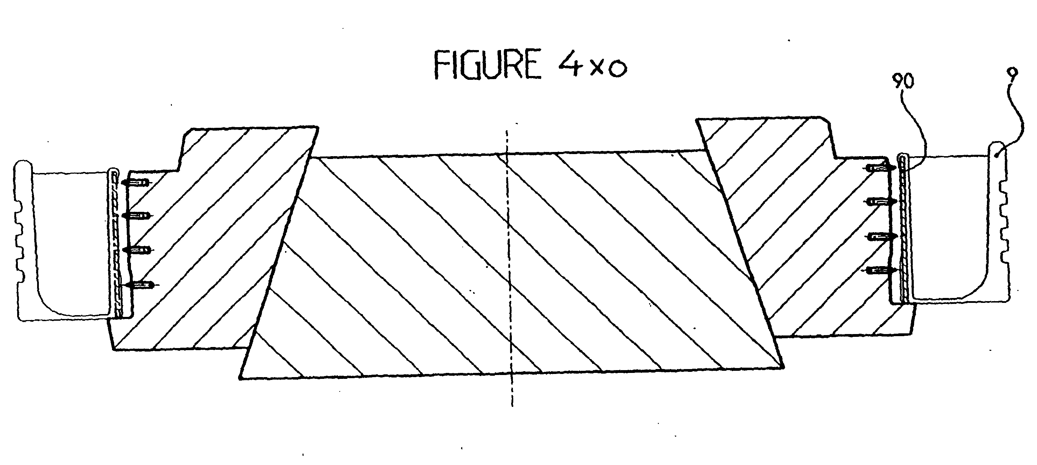

- à la figure 4xo, les mêmes éléments que ceux de la figure 3xo, en phase de démoulage,
- à la figure 4y, le même élément que celui de la figure 3y, dans la même phase de démoulage que celle de la figure 4xo,

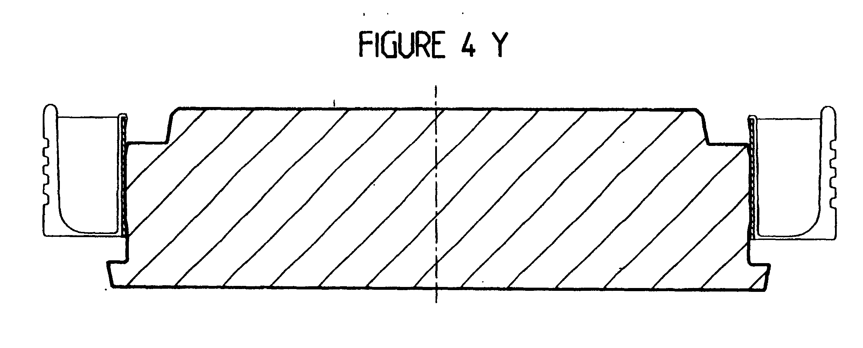

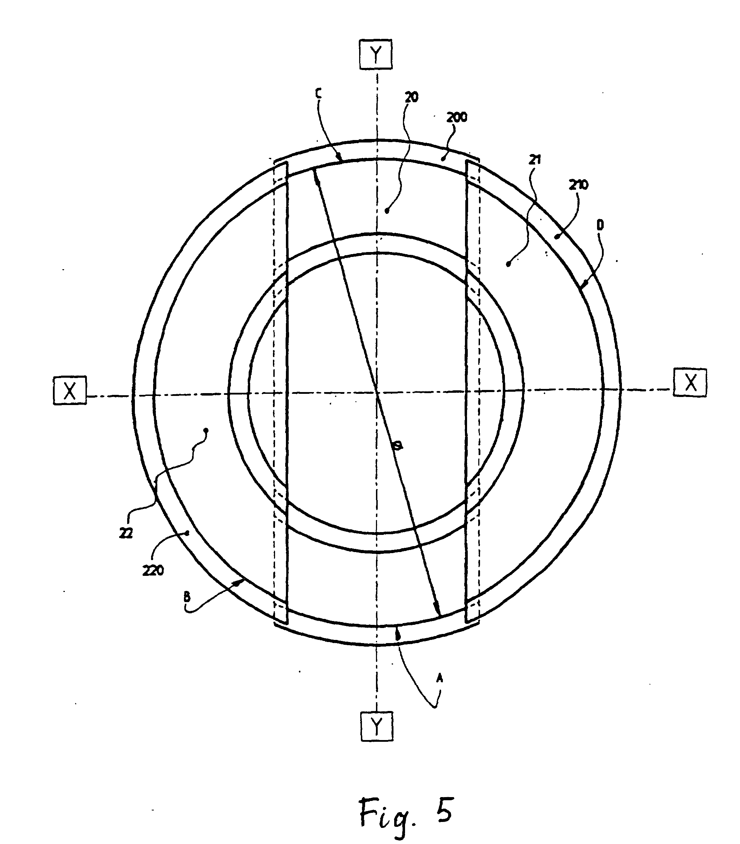

- à la figure 5, le noyau vu dans le même plan que celui de la figure 2, dans la même configuration initiale que celle de la figure 3xo,

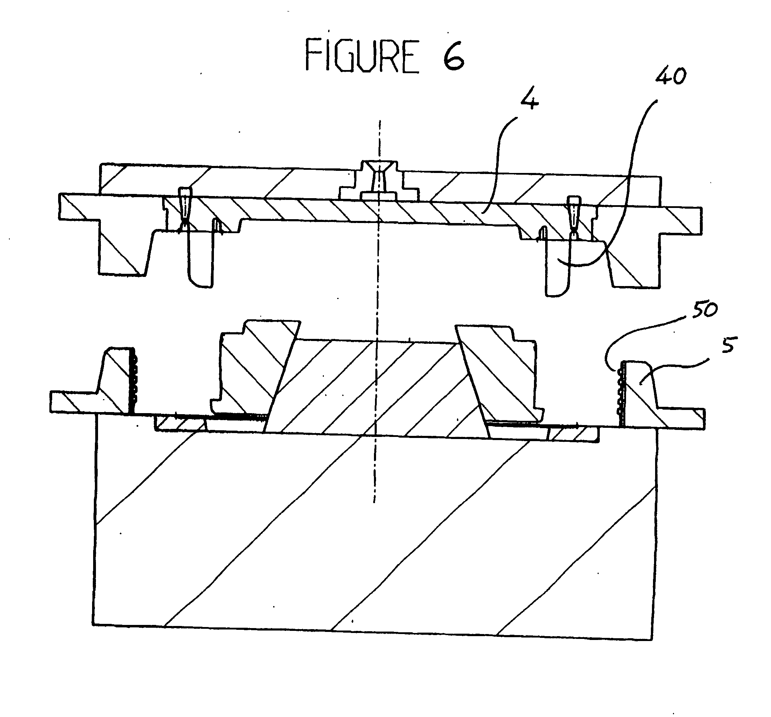

- à la figure 6, le moule selon le premier mode de réalisation de l'invention, installé dans une presse d'injection, montrant notamment un noyau selon une coupe selon XX à la figure 2, en position d'ouverture,

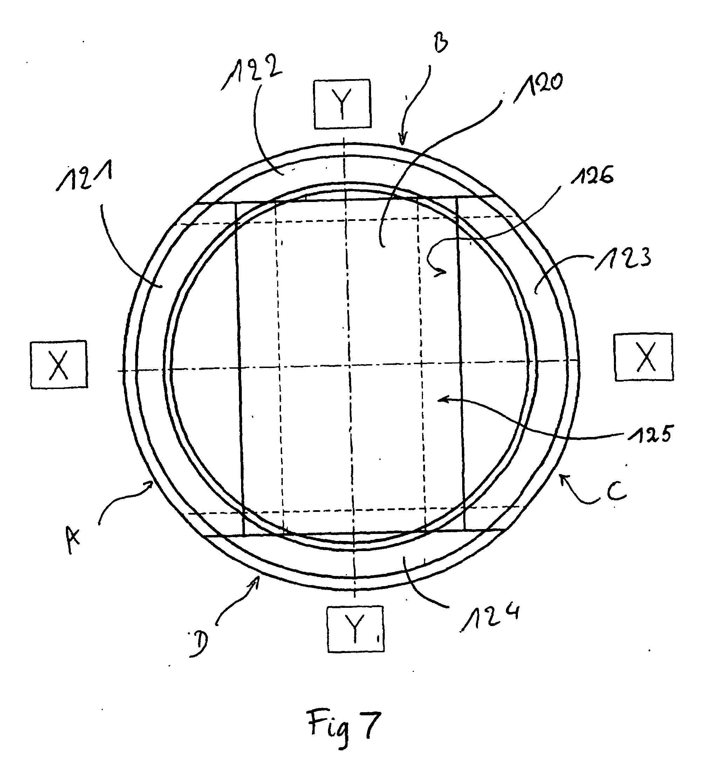

- à la figure 7, le noyau utilisé dans un deuxième mode de réalisation de l'invention, en configuration de fermeture,

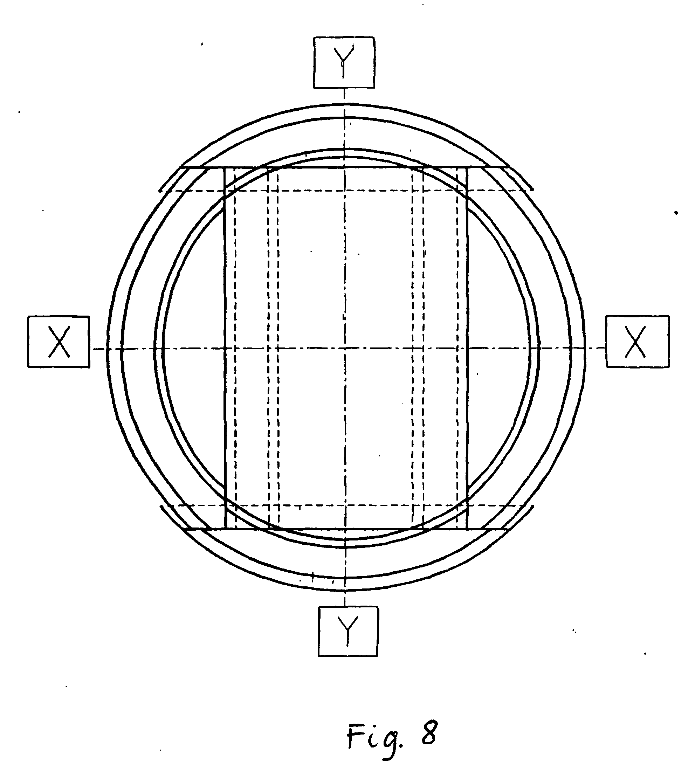

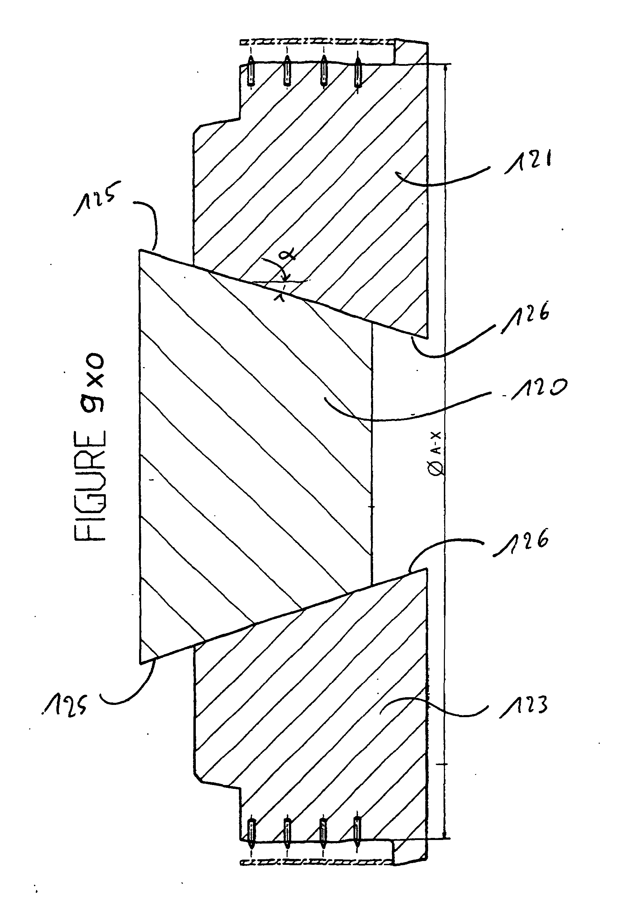

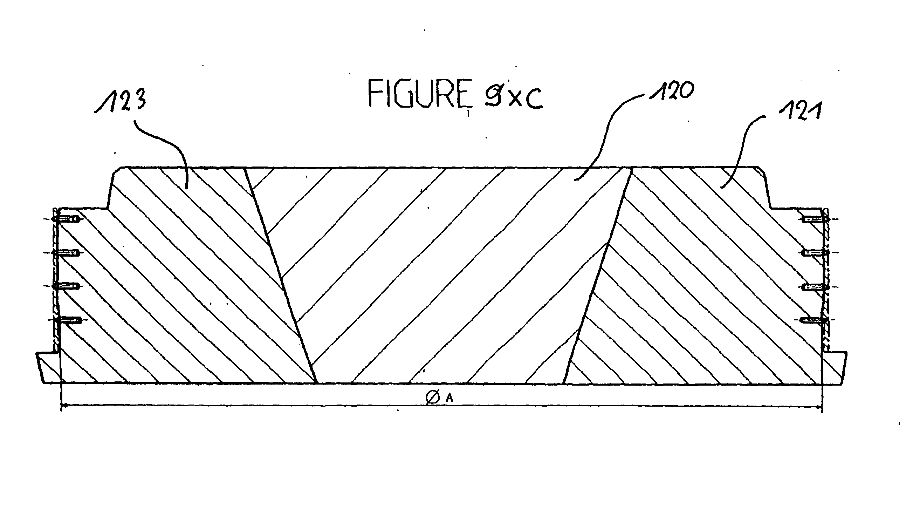

- à la figure 8, le noyau de la figure 7, en configuration d'ouverture,

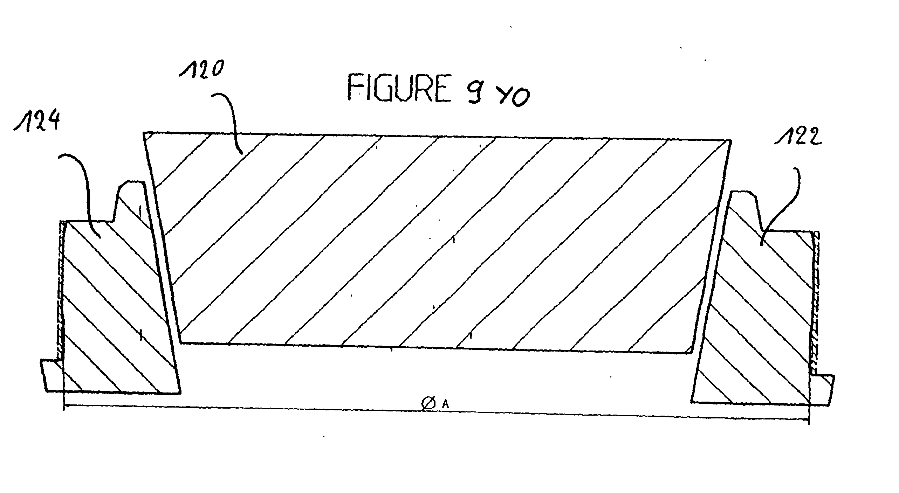

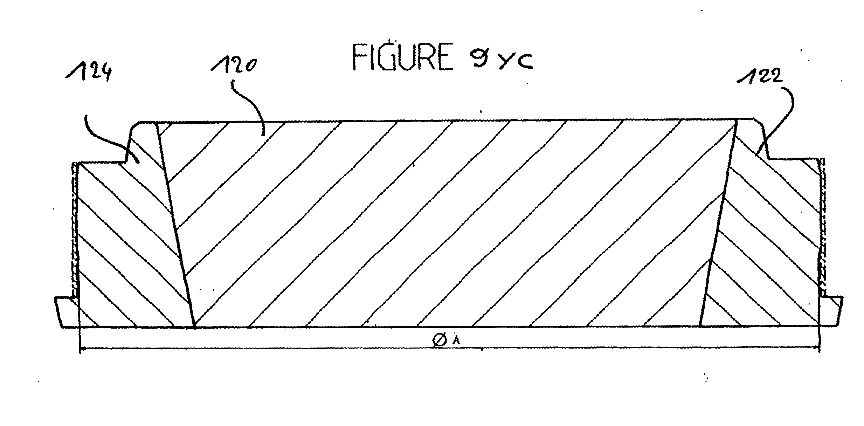

- à la figure 9xo, le noyau du deuxième mode de réalisation, dans une configuration initiale, la lettre " x " rappelant qu'il s'agit d'une coupe selon XX à la figure 8, la lettre " o " rappelant que le noyau est ouvert comme à la figure 8,
- à la figure 9xc, le noyau dans une configuration ultérieure, la lettre " c " rappelant que le noyau est fermé comme à la figure 7,
- à la figure 9yo, le noyau vu dans le plan de coupe YY à la figure 8,
- à la figure 9yc, le noyau vu dans le plan de coupe YY à la figure 7,

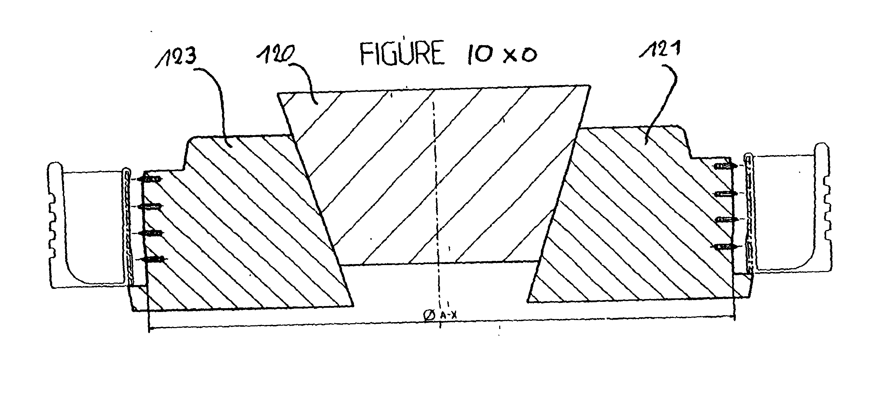

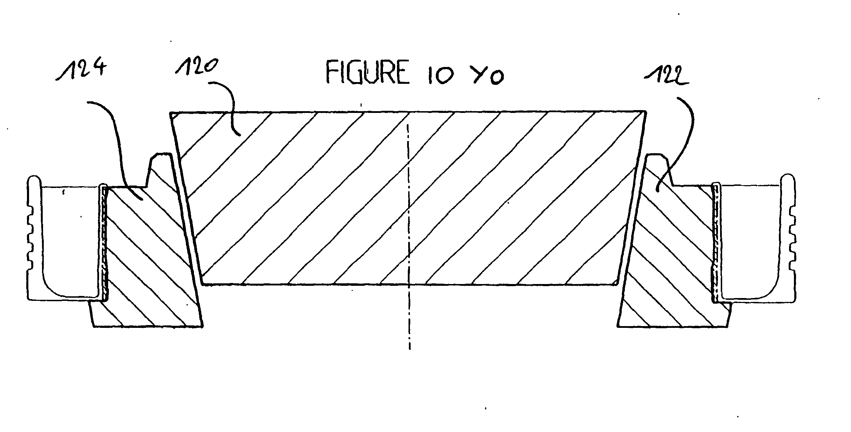

- à la figure 10xo, les mêmes éléments que ceux de la figure 9xo, en phase de démoulage,
- à la figure 10yo, le même élément que celui de la figure 9yo, dans la même phase de démoulage que celle de la figure 10xo,

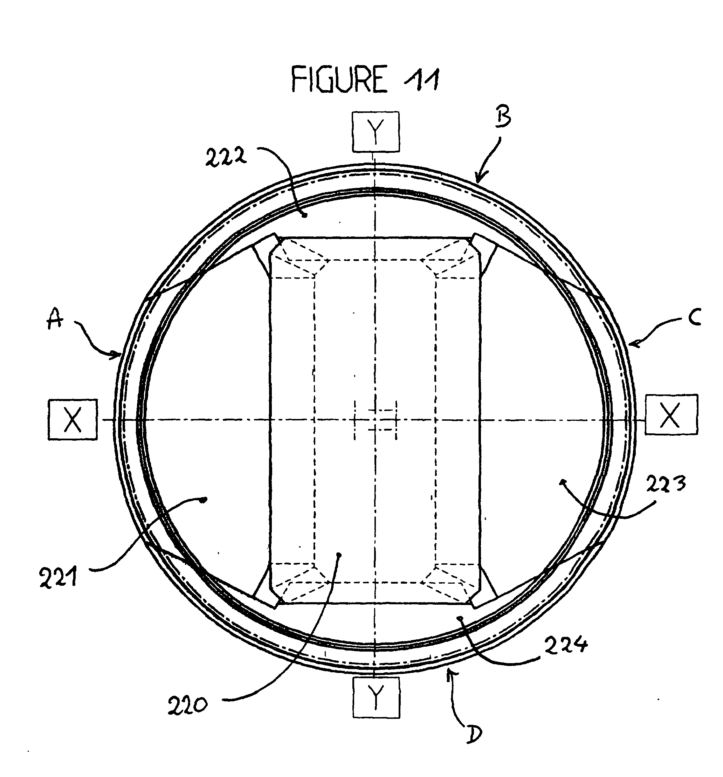

- à la figure 11, le noyau utilisé dans un troisième mode de réalisation de l'invention, en configuration de fermeture,

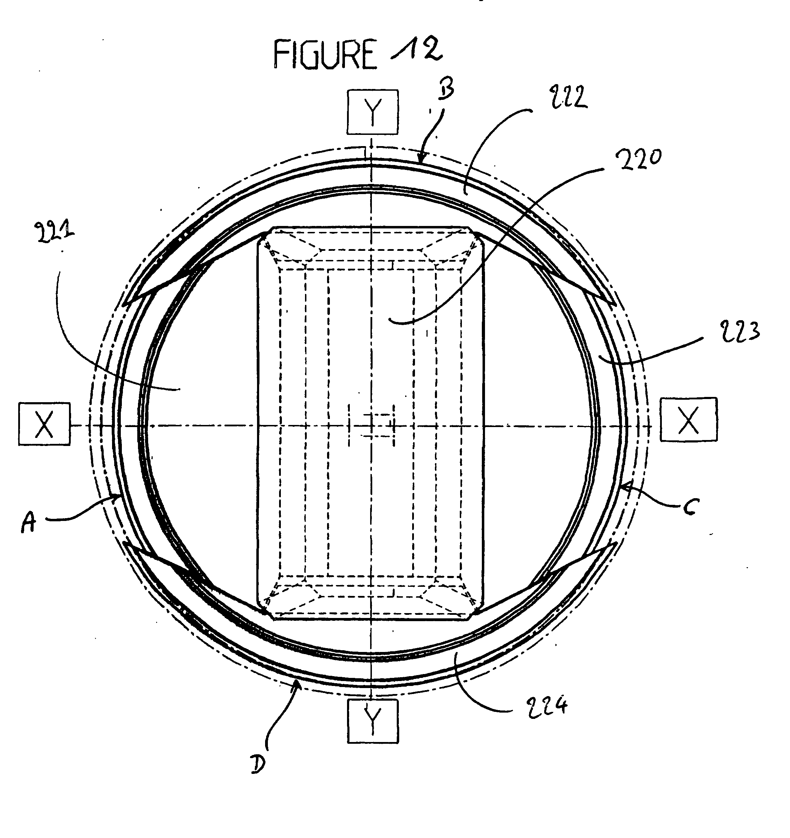

- à la figure 12, le noyau de la figure 11, en configuration d'ouverture,

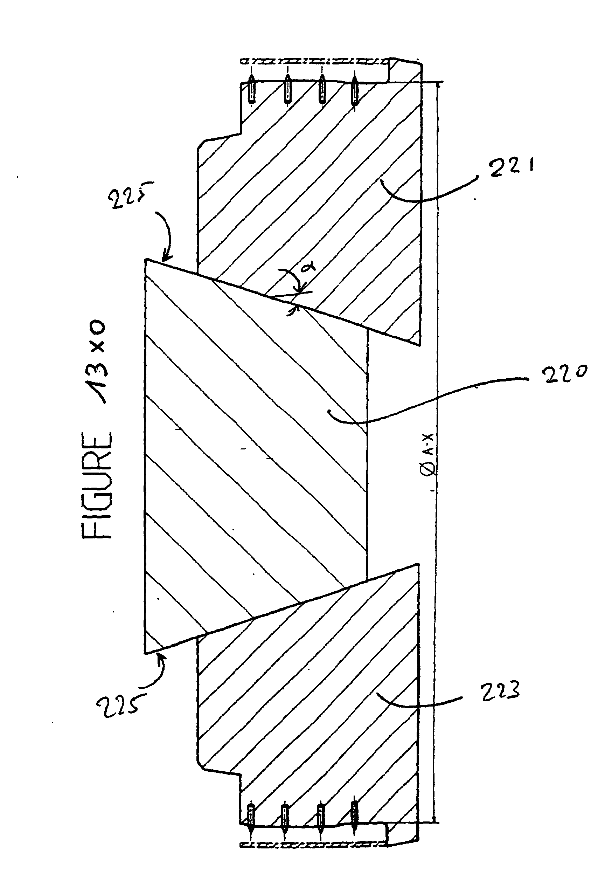

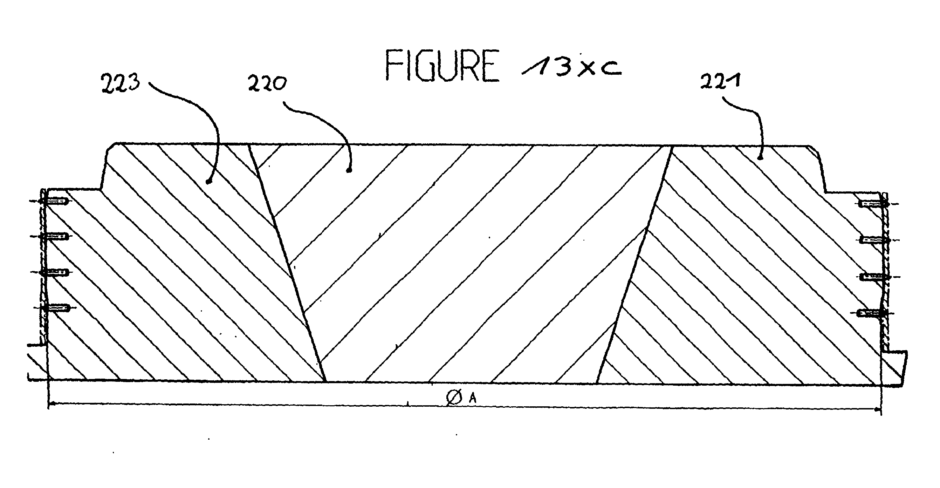

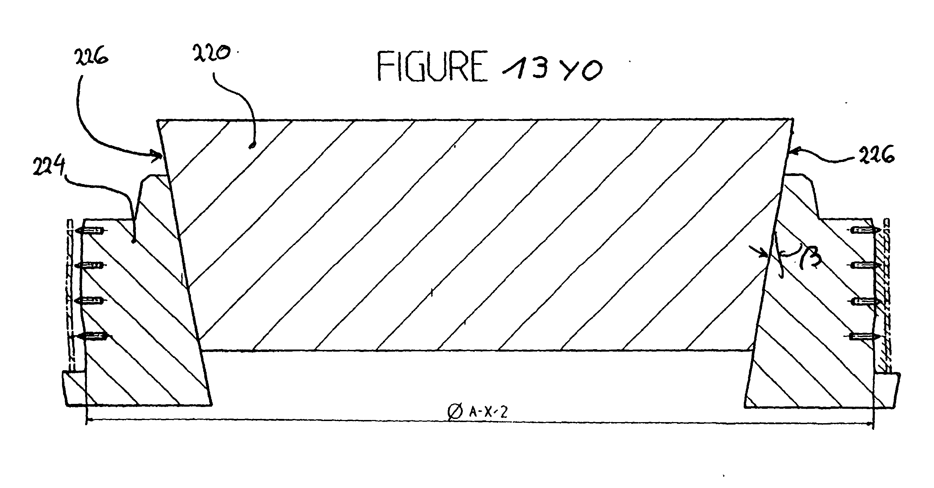

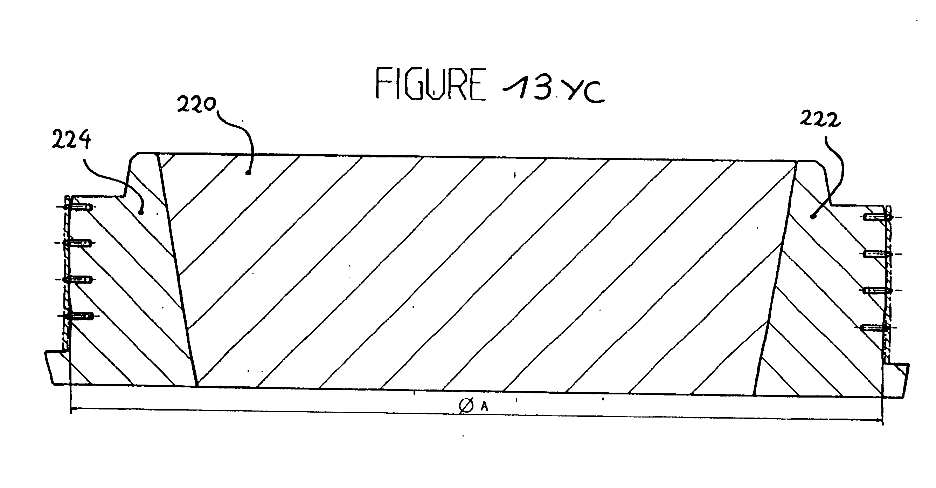

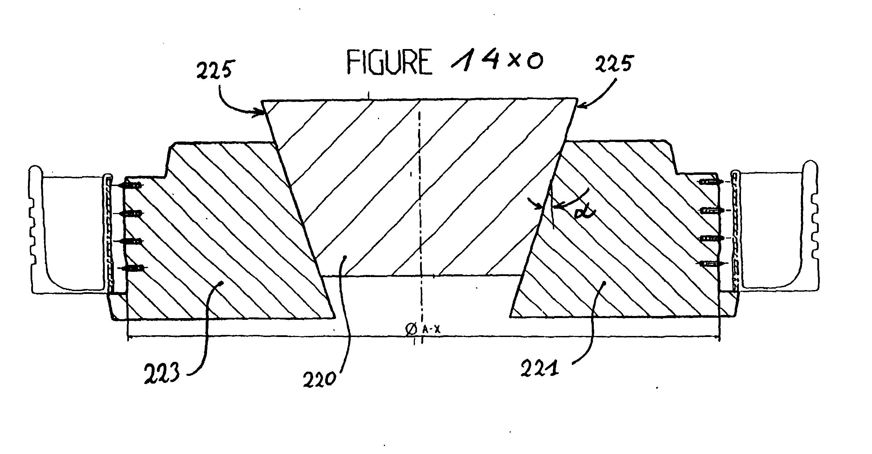

- à la figure 13xo, le noyau du troisième mode de réalisation, dans une configuration initiale, la lettre " x " rappelant qu'il s'agit d'une coupe selon XX à la figure 12, la lettre " o " rappelant que le noyau est ouvert comme à la figure 12,
- à la figure 13xc, le noyau dans une configuration ultérieure, la lettre " c " rappelant que le noyau est fermé comme à la figure 11,
- à la figure 13yo, le noyau vu dans le plan de coupe YY à la figure 12,
- à la figure 13yc, le noyau vu dans le plan de coupe YY à la figure 11,

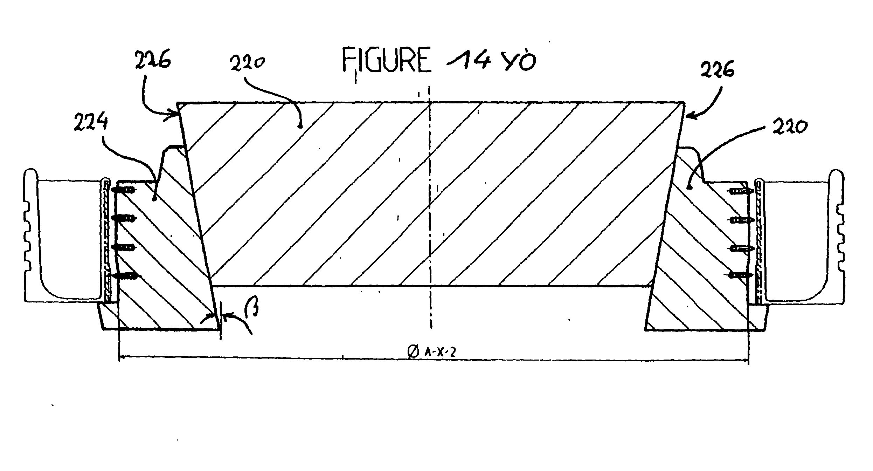

- à la figure 14xo, les mêmes éléments que ceux de la figure 13xo, en phase de démoulage,
- à la figure 14yo, le même élément que celui de la figure 13yo, dans la même phase de démoulage que celle de la figure 14xo,

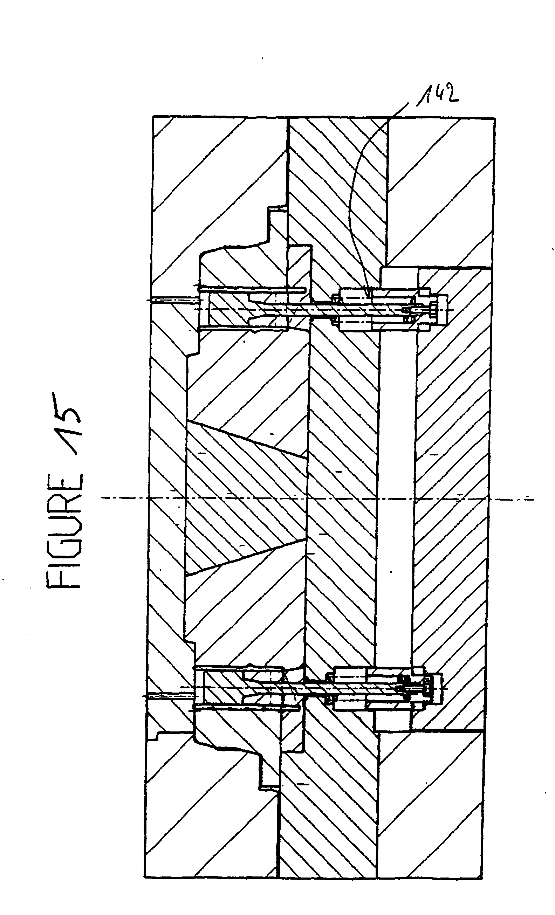

- à la figure 15, un moule selon un quatrième mode de réalisation de l'invention, installé dans une presse d'injection, selon une coupe comparable à celle selon XX à la figure 2, en position de fermeture,

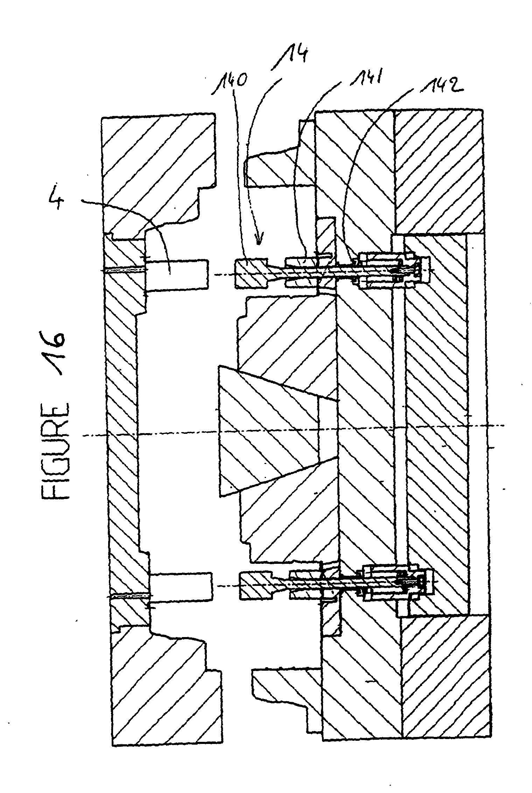

- à la figure 16, le moule selon le quatrième mode de réalisation, en position d'ouverture.

A la figure 1, on aperçoit la cavité 1 de moulage, à la forme de fabrication de l'appui. Cette cavité 1 est définie par un noyau intérieur 2 et d'autres pièces que sont un plateau inférieur 3 (monté sur un porte-plateau 7), un plateau supérieur 4 et des segments 5 moulant la surface d'appui proprement dite, située radialement à l'extérieur de l'appui. Etant donné les sillons et bossages que l'on souhaite dans cet exemple particulier mouler sur la surface d'appui (surface radialement extérieure), celle-ci est moulée par une pluralité de segments 5, capables d'un mouvement radial. On aperçoit deux des canaux d'injection 6, répartis sur la circonférence de l'appui.

La presse comporte des moyens (non représentés) pour commander le mouvement des segments 5, et est dotée d'un mécanisme capable d'imprimer un mouvement d'éloignement et de rapprochement relatif du porte-plateau 7 et du plateau supérieur 4. Ce mouvement d'éloignement et de rapprochement relatif permet non seulement l'ouverture du moule pour enlever l'appui après vulcanisation, mais il assure aussi les mouvements spécifiques du noyau 2 comme cela sera bien compris dans la suite.

Le noyau 2 est constituée par trois pièces rigides séparables : une pièce centrale 20 et deux pièces complémentaires 21, 22. Les trois pièces rigides comportent des surfaces de moulage de la face radialement intérieure de l'appui. Chacune des pièces complémentaires 21, 22 comporte à sa base un rebord 210, 220 formant une saillie radialement, et dont le rôle apparaîtra dans la suite. La pièce centrale 20 comporte également un rebord 200. Ces surfaces de moulage sont définies par quatre secteurs de moulage adjacents A, B, C, D. La pièce centrale 20 comporte deux secteurs de moulage A et C non adjacents et diamétralement opposés. Chacune des pièces complémentaires 21, 22 comporte respectivement l'un D ou B des deux autres secteurs de moulage. La pièce centrale comporte aussi deux portées planes 23, inclinées au même angle par rapport à l'axe du moule (voir figure 3xo). Ces portées planes 23 sont adjacentes aux secteurs de moulage A et C. Ces portées planes 23 sont destinées à coopérer avec des portées correspondantes 24 aménagées au dos de chacune des pièces complémentaires 21 et 22. De la sorte, un mouvement axial de ladite pièce centrale peut commander un mouvement radial des pièces complémentaires 21 et 22.

Rappelons que l'appui comporte, comme décrit dans la demande de brevet EP 0 796 747, un renforcement circonférentiel constitué essentiellement par des fils de renforcement orientés circonférentiellement, noyés dans une matrice en matériau élastomérique. Par ailleurs, l'appui comporte un corps pourvu d'un sommet ayant une surface d'appui radialement à l'extérieur, ledit sommet étant relié à ladite base, ledit corps présentant une pluralité d'évidements de direction sensiblement axiale. Afin de mouler ces évidements, le moule comporte des doigts 40 faisant protubérance par rapport au plateau supérieur 4. Il en résulte que la base de l'appui a une assez faible épaisseur radiale, mesurée entre ladite face radialement intérieure et l'un quelconque des évidements (typiquement inférieure à 15 mm). Lors de l'injection, le flux de caoutchouc est confiné entre les doigts 40 et les fils de renforcement disposés sur la base radialement inférieure de la cavité de moulage.

Or les fils eux-mêmes doivent être installés dans le moule au début de chaque fabrication. Il convient donc que les manipulations requises soient simples pour garantir un bon positionnement, et soient rapides pour garantir une bonne productivité. Une technique commode consiste à préfabriquer un anneau 90 formant une sorte de ceinture contenant les fils circonférentiels qu'il est nécessaire d'incorporer dans la base de l'appui.

Pour fabriquer un tel anneau 90, on peut par exemple, sur un mandrin comparable à un tambour pour le premier stade de la fabrication d'un pneumatique, déposer les fils de renforcement circonférentiels enrobés dans une matrice en matériau élastomérique. A cette fin, on utilise un fil unique enrobé de caoutchouc, une bandelette de fils enrobés dans du caoutchouc, ou une nappe de fils enrobés dans du caoutchouc, comme bien connu pour la fabrication des frettes à zéro degré que l'on trouve couramment dans le sommet des pneumatiques pour véhicules de tourisme. Cet anneau 90, donc quasi inextensible circonférentiellement, constituera en fait la peau intérieure de l'appui et doit donc être installé tout contre la paroi de moulage de la face radialement intérieure de l'appui. Or cet anneau est très flexible, ce qui rend difficile son installation correcte dans le moule.

Il convient donc de bien immobiliser les fils de renforcement dans le moule pour que, lors de l'injection du caoutchouc, lesdits fils restent bien à la place qui leur est imposée par l'architecture de l'appui. Ainsi, de préférence, lors de l'établissement de la configuration de moulage, l'anneau constitué ici par les fils orientés circonférentiellement est mis sous tension.

L'invention permet de résoudre le dilemme d'une parfaite tenue des fils dans le moule lors de l'injection ou de toute forme de refoulement sous pression de la matière constitutive dans le moule fermé, sans compromettre ni une installation aisée desdits fils de renforcement dans le moule ni un démoulage aisé de l'appui fabriqué.

Selon l'invention, les pièces du noyau 2 sont susceptibles de prendre une configuration de moulage dans laquelle lesdites pièces rigides forment une surface de moulage continue circonférentiellement, image exacte de la forme finale de fabrication de la surface radialement intérieure de la base de l'appui. Cette configuration de moulage est caractérisée par un diamètre de référence correspondant au diamètre intérieur dudit appui. Les figures 1, 2 et 3xc sont caractéristiques de la configuration de moulage. Les pièces du noyau 2 sont aussi susceptibles de prendre une configuration de démoulage, caractérisée par une longueur d'enveloppe E des pièces de moulage inférieure au diamètre de référence. Cela signifie que, considérant que φ est le diamètre de la surface de moulage définie par lesdits quatre secteurs de moulage adjacents A, B, C, D (voir figure 5), la longueur d'une corde tendue à ladite surface de moulage dans la configuration de démoulage, valant E, est strictement inférieure à πφ. Les figures 3xo, 4xo qui est identique à 3xo, et 5 sont typiques de la configuration de démoulage.

Les principales étapes de la fabrication sont les suivantes. On préfabrique de toute manière appropriée un anneau 90 contenant les fils de renforcement. Ensuite, la configuration de démoulage du noyau 2 étant établie (voir figure 5, ainsi que figure 3xo pour la coupe selon le plan XX de la figure 5, et la figure 3y pour la vue selon le plan YY de la figure 5), on installe ledit anneau 90 sur ledit noyau 2. L'anneau 90 est disposé contre les rebords 210 et 220, ce qui garantit son positionnement axial précis. Puis on établit la configuration de moulage du noyau (voir figure 2, ainsi que figure 3xc pour la coupe selon le plan XX de la figure 2, et la figure 3y pour la vue selon le plan YY de la figure 2) par déploiement radial des pièces complémentaires 21 et 22. Ensuite, on peut compléter la fermeture du moule et refouler sous pression la matière constitutive du corps de l'appui, par exemple par injection, puis bien entendu on peut démouler.

Afin d'améliorer encore la tenue de l'anneau 90, chaque secteur de moulage desdites pièces complémentaires 21 et 22 comporte une pluralité de picots 25 faisant protubérance radialement. Lors de l'établissement de la configuration de moulage, ces picots 25 pénètrent dans l'anneau 90 pour bien maintenir les fils. Après démoulage, ces picots 25 laissent de petits creux sur la surface interne de l'appui, ce qui est sans inconvénient pour l'usage de l'appui.

Bien entendu, le démoulage suppose l'ouverture complète du moule. De préférence, on rétablit la configuration de démoulage (voir figures 4xo et 4y) pour faciliter le retrait l'appui. Notons aussi que la présence des picots engagés dans le caoutchouc vulcanisé facilite l'extraction des doigts 40 au tout début du démoulage.

On voit que, notamment pour les formes d'appui les plus simples et dans le cas où il n'y a pas de picots, l'allure de la face radialement intérieure forme une surface démoulable parallèlement audit axe de rotation. On comprendra donc que la conception du noyau, à la base, n'est pas dictée par des considérations de moulage, mais principalement par la volonté de rendre possible l'injection sur un renforcement à base de fils, ayant peu d'aptitude à supporter une étape d'injection. Plus généralement, l'invention propose d'utiliser le refoulement sous pression dans une cavité de moulage fermée, en combinaison avec un noyau en plusieurs pièces pour mouler un appui dont la face radialement intérieure forme une surface présentant par rapport à une surface démoulable parallèlement à l'axe de rotation des déviations de hauteur radiale inférieure à 5 mm.

Quant au sommet de l'appui par lequel la charge est transmise à la base, on voit qu'il comporte des rainures moulées par des nervures 50 correspondantes prévues sur les segments 5 du moule. Or on sait que le moule comporte une pluralité de doigts 40 axiaux disposés au moins sur un plateau supérieur 4. On peut, afin de faciliter l'extraction de ces doigts lors du démoulage, écarter axialement, au moins partiellement, et par rapport au noyau, chacune desdites coquilles comprenant des doigts axiaux avant d'établir la configuration de démoulage dudit noyau. On peut aussi, toujours afin de faciliter l'extraction de ces doigts lors du démoulage, et plus particulièrement dans le cas où la forme de la face radialement extérieure du sommet s'écarte d'une forme cylindrique, écarter axialement, au moins partiellement, et par rapport à l'anneau de moulage du sommet, chacune desdites coquilles comprenant des doigts axiaux avant d'écarter radialement lesdites parties de l'anneau.

Si l'on consulte ensemble les figures 1 et 6, on comprend bien que si les segments 5 sont encore à leur position de moulage (celle de la figure 1) pendant que le plateau supérieur 4 est écarté axialement vers la position qu'il occupe à la figure 6, emportant avec lui les doigts 40, la prise des nervures 50 dans l'appui aide bien à maintenir l'appui sur le noyau. Ensuite, l'ouverture des segments 5 (ainsi que du noyau) ne pose aucun problème de démoulage.

Après avoir décrit en détails un premier mode de réalisation de l'invention, différentes variantes plus élaborées sont présentées, en se focalisant sur les perfectionnements qu'elles amènent.

Les figures 7 à 10 illustrent un deuxième mode de réalisation de l'invention, dans lequel ledit noyau comporte cinq pièces de moulage rigides séparables, une pièce centrale 120 et quatre pièces complémentaires 121, 122, 123, 124. Les quatre pièces complémentaires ont quatre secteurs de moulage adjacents A, B, C, D constituant des surfaces de moulage de ladite face radialement intérieure. La pièce centrale 120 comportant deux portées 125, inclinées d'angles de même valeur et de signes opposés par rapport à l'axe du moule. Lesdites portées 125 sont destinées à coopérer avec des portées correspondantes 126 aménagées au dos de deux des pièces complémentaires 121, 123. Lesdites portées correspondantes 126 sont adjacentes auxdits secteurs de moulage, de sorte qu'un mouvement axial de ladite pièce centrale commande un mouvement radial desdites deux pièces complémentaires 121, 123.

Il y a donc recul radial de deux seulement (A et C) des quatre secteurs de moulage adjacents, tout comme dans la variante précédente. Mais contrairement à ladite première variante, lors du démoulage, il n'y a aucun mouvement axial relatif entre l'appui et les secteurs de moulage A, B, C et D, comme bien visible aux figures 10xo et 10yo. Si l'on consulte les figures 4xo et 4y, on comprend qu'il y a mouvement axial relatif inévitable entre l'appui et les secteurs de moulage. On retrouve la même différence en phase de moulage. La mise sous tension de l'anneau 90 s'accompagne inévitablement, en phase finale, d'un léger mouvement axial relatif, donc d'un frottement, entre l'anneau 90 et la pièce centrale 20 à la figure 3y. Au contraire, il n'y a aucun mouvement axial relatif, donc aucun frottement parasite dans la même phase avec le deuxième mode de réalisation de l'invention, ce que l'on aperçoit immédiatement en consultant toutes les figures 9.

Les figures 11 à 14 illustrent un troisième mode de réalisation de l'invention, dans lequel noyau comporte cinq pièces de moulage rigides séparables, une pièce centrale 220 et quatre pièces complémentaires 221, 222, 223, 224, tout comme dans le deuxième mode de réalisation de l'invention. Les quatre pièces complémentaires ont également quatre secteurs de moulage adjacents (A, B, C, D) constituant des surfaces de moulage de ladite face radialement intérieure. Tout comme dans le deuxième mode de réalisation de l'invention, il n'y a aucun mouvement axial relatif, donc aucun frottement parasite, aussi bien en phase d'installation d'un anneau 90 qu'en phase de démoulage de l'appui.

La différence est que, cette fois, toutes les pièces complémentaires 221, 222, 223, 224 peuvent être escamotées radialement. A cette fin, la pièce centrale 220 comporte deux paires de portées 225, 226, inclinées pour la première paire d'angles +α et -α par rapport à l'axe du moule, et pour la seconde paire d'angles +β et -β par rapport à l'axe du moule, donc également opposés et de valeur différente (β), de préférence au moins dans le rapport de deux à un par rapport à la valeur α. Ces portées jouent toutes un rôle fonctionnel pour contrôler le recul radial des secteurs de moulage A, B, C et D. Lesdites portées destinées à coopérer avec des portées correspondantes 227, 228 aménagées au dos de toutes les pièces complémentaires 221, 222, 223, 224, lesdites portées correspondantes 227, 228 étant adjacentes auxdits secteurs de moulage, de sorte qu'un mouvement axial de ladite pièce centrale commande un mouvement radial desdites pièces complémentaires. L'avantage est que toutes les pièces complémentaires s'escamotent radialement. C'est ce que l'on voit bien aux figures 13xo et 13yo, ou 14xo et 14yo, la différence de configuration entre les figures 9yo et 10yo pour le deuxième mode de réalisation et les figures 13yo et 14yo pour le troisième mode de réalisation étant bien apparente.

On a pu noter que, dans le deuxième mode de réalisation, la pièce centrale 120 comporte aussi deux paires de portées inclinées selon des angles ayant deux valeurs différentes. Dans ce cas cependant, l'un des angles ne joue pas de rôle dans la cinématique. Eviter des portées parallèles à l'axe du moule présente un intérêt pour assurer l'annulation des jeux à la fermeture du moule, d'où l'allure du noyau semblable dans les deuxième et troisième modes de réalisation.

Enfin, les figures 15 et 16 illustrent un quatrième mode de réalisation concernant cette fois les doigts de moulage. Bien entendu, cet aspect est compatible avec tous les autres modes de réalisation, ceux-ci proposant différents noyaux. Sur l'une des coquilles, on retrouve des doigts 4 forts semblables à ce qui a été décrit ci-dessus. Sur l'autre des coquilles, sont implantés des doigts éjecteurs 14, circonférentiellement en alternance avec les doigts 4 (voir figure 16). Certains des doigts (les doigts 14) sont réalisés en deux parties 140 et 141, séparables axialement. La partie d'extrémité 140 peut être écartée de sa base 141, afin de favoriser le démoulage de l'appui. La position déployée, ou position d'éjection, de la figure 16, est la position naturelle et est obtenue sous la pression de ressorts 142. La position de moulage est obtenue par actionnement adéquat lors de la fermeture du moule, plus précisément lors du rapprochement axial des coquilles.

## Revendications

1. Procédé de fabrication d'un appui destiné à être monté sur une jante de véhicule, ledit appui ayant un axe de rotation, une base limitée par une face radialement intérieure sensiblement cylindrique destinée à être montée autour de ladite jante, un sommet destiné à supporter la charge et un corps reliant ladite base audit sommet, ladite base comprenant un renforcement circonférentiel sensiblement inextensible, la face radialement extérieure dudit sommet ayant une forme s'écartant de la forme cylindrique, le corps comportant une pluralité d'évidements axiaux débouchant d'un côté au moins dudit appui, ledit procédé de fabrication utilisant un moule ayant un axe correspondant audit axe de rotation, ledit moule comprenant :
- un noyau intérieur (2) assurant le moulage de ladite face radialement intérieure,
- un anneau de moulage (5) du sommet, ledit anneau comprenant au moins deux parties séparables radialement l'une par rapport à l'autre, lesdites parties séparables permettant de mouler ladite face radialement extérieure dudit sommet,
- au moins une coquille comportant une pluralité de doigts axiaux (40) pour mouler latéralement ledit corps et lesdits évidements, ledit noyau, ledit anneau et ladite coquille coopérant pour définir au moins partiellement une cavité fermée pour mouler ledit appui,
ledit noyau (2) comprenant au moins deux pièces constitutives (20,21,22) et étant susceptible de prendre une configuration de moulage dans laquelle ses pièces constitutives forment une surface de moulage continue circonférentiellement pour mouler ladite face radialement intérieure, la surface de moulage étant définie par un diamètre de référence φ correspondant sensiblement au diamètre intérieur dudit appui, ledit noyau étant également susceptible de prendre une configuration de démoulage de forme différente de la configuration de moulage, définie par une longueur d'enveloppe E autour de ladite surface de moulage inférieure au produit du nombre π et du diamètre de référence φ, ledit procédé de fabrication comprenant les étapes suivantes :
• préfabriquer un anneau (90) comportant ledit renforcement circonférentiel,
• établir la configuration de démoulage dudit noyau,
• installer ledit anneau sur ledit noyau,
• établir la configuration de moulage dudit noyau,
• fermer le moule puis refouler sous pression dans ledit moule une matière élastique à l'état final et injectable
• écarter axialement ladite coquille comprenant des doigts axiaux (40), au moins partiellement, relativement par rapport à au moins l'un des composants que sont l'anneau de moulage et le noyau,
• puis établir la configuration de démoulage dudit noyau et écarter radialement lesdites parties de l'anneau de moulage du sommet,
• évacuer ledit appui.

2. Procédé selon la revendication 1, dans lequel ledit renforcement circonférentiel sensiblement inextensible comporte des fils de renforcement orientés sensiblement circonférentiellement, noyés dans une matrice en matériau élastomérique.

3. Procédé selon l'une des revendications 1 ou 2 dans lequel, lors de l'établissement de la configuration de moulage, ledit anneau est mis sous tension.

4. Procédé selon l'une des revendications 1 à 3, pour mouler un appui comportant une pluralité d'évidements axiaux débouchant les uns d'un côté et les autres de l'autre côté dudit appui, utilisant un moule comprenant deux coquilles comportant chacune une pluralité de doigts axiaux (40) pour mouler latéralement ledit corps et lesdits évidements de part et d'autre de l'appui, dans lequel on écarte axialement, au moins partiellement et par rapport au noyau (2) et par rapport à l'anneau de moulage (5) du sommet, chacune desdites coquilles comprenant des doigts axiaux avant d'établir la configuration de démoulage dudit noyau et d'écarter radialement lesdites parties de l'anneau.

5. Moule pour le moulage d'un appui destiné à être monté sur une jante de véhicule, ledit appui ayant un axe de rotation, une base ayant une face radialement intérieure sensiblement cylindrique destinée à être montée autour de ladite jante, un sommet destiné à supporter la charge et un corps reliant ladite base audit sommet, ladite base comprenant un renforcement circonférentiel sensiblement inextensible, ledit moule ayant un axe correspondant audit axe de rotation, ledit moule comprenant un noyau intérieur (2) assurant le moulage de ladite face radialement intérieure, ledit moule comprenant d'autres pièces créant avec ledit noyau une cavité fermée pour mouler ledit appui, ledit noyau étant constitué par au moins deux pièces de moulage séparables (20,21,22), l'une des pièces (21,22) comportant un secteur de moulage allant circonférentiellement d'un premier bord à un second bord et définissant partiellement la surface de moulage de ladite face radialement intérieure, ledit secteur de moulage étant prolongé, directement ou indirectement, par une interface allant dudit premier bord audit second bord et passant par l'intérieur du noyau, ladite interface formant une ou plusieurs portées (23,24) engendrées par une droite translatée parallèlement à elle-même et inclinée selon un premier angle par rapport à l'axe du moule, lesdites pièces de moulage étant susceptibles de prendre une configuration de moulage dans laquelle lesdites pièces forment une surface de moulage continue circonférentiellement, définie par un diamètre de référence φ correspondant sensiblement au diamètre intérieur dudit appui, et une configuration de démoulage par glissement d'une pièce sur une autre pièce le long de ladite interface, ladite configuration de démoulage ayant une longueur d'enveloppe E inférieure au produit du nombre π et du diamètre de référence φ.

6. Moule selon la revendication 5, dans lequel ledit noyau comporte au moins trois pièces de moulage rigides séparables, le noyau comportant un plan de symétrie contenant ledit axe du moule.

7. Moule selon la revendication 5, dans lequel ledit noyau est constitué par trois pièces de moulage rigides séparables, une pièce centrale (20) et deux pièces complémentaires (21, 22), lesdites trois pièces rigides ayant quatre secteurs de moulage adjacents (A, B, C, D) constituant des surfaces de moulage de ladite face radialement intérieure, la pièce centrale (20) ayant deux secteurs de moulage non adjacents (A et C) et diamétralement opposés, la pièce centrale comportant deux portées (23), inclinées d'angles de même valeur et de signes opposés par rapport à l'axe du moule, lesdites portées étant dans le prolongement, directement ou indirectement, desdits secteurs de moulage non adjacents, lesdites portées étant destinées à coopérer avec des portées correspondantes (24) aménagées au dos de chacune des pièces complémentaires (21, 22) de sorte qu'un mouvement axial de ladite pièce centrale commande un mouvement radial desdites pièces complémentaires.

8. Moule selon la revendication 5, dans lequel ledit noyau comporte cinq pièces de moulage rigides séparables, une pièce centrale (120) et quatre pièces complémentaires (121, 122, 123, 124), lesdites quatre pièces complémentaires ayant quatre secteurs de moulage adjacents (A, B, C, D) constituant des surfaces de moulage de ladite face radialement intérieure, la pièce centrale (120) comportant deux portées (125), inclinées d'angles de même valeur et de signes opposés par rapport à l'axe du moule, lesdites portées étant destinées à coopérer avec des portées correspondantes (126) aménagées au dos de deux des pièces complémentaires (121, 123), lesdites portées correspondantes (126) étant dans le prolongement, directement ou indirectement, desdits secteurs de moulage, de sorte qu'un mouvement axial de ladite pièce centrale commande un mouvement radial desdites deux pièces complémentaires (121, 123).

9. Moule selon la revendication 5, dans lequel ledit noyau comporte cinq pièces de moulage rigides séparables, une pièce centrale (220) et quatre pièces complémentaires (221, 222, 223, 224), lesdites quatre pièces complémentaires ayant quatre secteurs de moulage adjacents (A, B, C, D) constituant des surfaces de moulage de ladite face radialement intérieure, la pièce centrale (220) comportant deux paires de portées (225, 226), inclinées pour la première paire d'angles +α et -α par rapport à l'axe du moule, et pour la seconde paire d'angles +β et -β par rapport à l'axe du moule, également opposés et de valeur (β) différente par rapport à la valeur α, lesdites portées étant destinées à coopérer avec des portées correspondantes (227, 228) aménagées au dos de toutes les pièces complémentaires (221, 222, 223, 224), lesdites portées correspondantes (227, 228) étant dans le prolongement, directement ou indirectement, desdits secteurs de moulage, de sorte qu'un mouvement axial de ladite pièce centrale commande un mouvement radial desdites pièces complémentaires.

10. Moule selon l'une des revendications 5 à 9, dans lequel lesdites portées sont planes.

11. Moule selon l'une des revendications 7 à 9, dans lequel les secteurs de moulage de certaines desdites pièces complémentaires comportent une pluralité de picots (25) faisant protubérance radialement.

12. Moule selon l'une des revendications 5 à 11, dans lequel chacun des secteurs de moulage comporte un rebord formant une saillie radialement.

13. Moule selon l'une des revendications 5 à 12, dans lesdites autres pièces créant avec ledit noyau une cavité fermée comprennent une coquille pourvue de doigts orientés axialement, la coquille étant destinée à mouler latéralement ledit corps, lesdits doigts étant destinés à mouler des évidements dans ledit corps, certains desdits doigts, les doigts éjecteurs, étant réalisés en deux parties séparables axialement, la partie d'extrémité pouvant être écartée de sa base afin de favoriser le démoulage de l'appui.

## Patentansprüche

1. Verfahren zur Herstellung eines Stützkörpers, der dazu bestimmt ist, auf einer Fahrzeugfelge montiert zu werden, wobei der genannte Stützkörper eine Drehachse, eine Basis, die durch eine im wesentlichen zylindrische, radial innere Fläche begrenzt ist, die dazu bestimmt ist, rund um die genannte Felge angebracht zu werden, einen Scheitel, der dazu bestimmt ist, die Last abzustützen, und einen Körper aufweist, der die genannte Basis mit dem genannten Scheitel verbindet, die genannte Basis eine im wesentlichen undehnbare Umfangsverstärkung aufweist, die radial äußere Wand des genannten Scheitels eine Form hat, die von der zylindrischen Form abweicht, und der Körper eine Vielzahl von axialen Ausnehmungen aufweist, die mindestens auf einer Seite des genannten Stützkörpers münden, wobei das genannte Herstellungsverfahren ein Formwerkzeug benutzt, das eine Achse aufweist, die der genannten Drehachse entspricht, und das genannte Formwerkzeug die folgenden Merkmale aufweist:
- einen inneren Kern (2), der die Abformung der genannten, radial inneren Fläche sicherstellt,
- einen Ring (5) zum Abformen des Scheitels, wobei der genannte Ring mindestens zwei, radial voneinander trennbare Teile aufweist, und die genannten, trennbaren Teile es gestatten, die genannte, radial äußere Fläche des genannten Scheitels abzuformen,
- mindestens eine Kokille, die eine Vielzahl axialer Finger (40) aufweist, um von der Seite her den genannten Körper und die genannten Ausnehmungen abzuformen, wobei der genannte Kern, der genannte Ring und die genannte Kokille zusammenwirken, um mindestens zum Teil einen geschlossenen Hohlraum zum Abformen des genannten Stützkörpers zu bilden,
wobei der genannte Kern (2) mindestens zwei Bestandteile (20, 21, 22) aufweist, und imstande ist, eine Formgebungsausbildung einzunehmen, in der seine Bestandteile eine in Umfangsrichtung durchgehende Formgebungsoberfläche bilden, um die genannte, radial innere Fläche abzuformen, die Formgebungsoberfläche durch einen Bezugsdurchmesser Φ definiert ist, der im wesentlichen dem Innendurchmesser des genannten Stützkörpers entspricht, der genannte Kern auch dazu imstande ist, eine Ausform-Ausbildung einzunehmen, die sich von der Abformausbildung unterscheidet und durch eine Umhüllungslänge E um die genannte, innere Formgebungsoberfläche definiert ist, die kleiner ist als das Produkt aus der Zahl π und dem Bezugsdurchmesser Φ, und das genannte Herstellungsverfahren die folgenden Schritte umfaßt:
• Vorfertigen eines Ringes (90), der die genannte Umfangsverstärkung aufweist,
• Herstellen der Formgebungsausbildung des genannten Kerns,
• Einsetzen des genannten Rings über den genannten Kern,
• Herstellen der Formgebungsausbildung des genannten Kerns,
• Schließen des Formwerkzeugs und dann Einpressen eines im Endzustand elastischen, einspritzbaren Materials unter Druck in das genannte Formwerkzeug,
• axiales Entfernen der genannten Kokille mit den axialen Fingern (40) mindestens teilweise in Bezug auf mindestens einem der Bestandteile, die der Formgebungsring und der Kern sind,
• dann Herstellen der Ausformausbildung des genannten Kernes und axiales Auseinanderspreizen der genannten Teile des Formgebungsringes des Scheitels, und
• Entnehmen des genannten Stützkörpers.

2. Verfahren nach Anspruch 1, worin die im wesentlichen undehnbare Umfangsverstärkung Verstärkungsdrähte aufweist, die im wesentlichen in Umfangsrichtung ausgerichtet sind und in eine Matrix aus Elastomermaterial eingelassen sind.

3. Verfahren nach einem der Ansprüche 1 oder 2, worin der genannte Ring während der Herstellung der Formgebungsausbildung unter Spannung gesetzt ist.

4. Verfahren nach einem der Ansprüche 1 bis 3, zum Abformen eines Stützkörpers, der eine Vielzahl axialer Ausnehmungen aufweist, von denen die einen auf der einen Seite und die anderen auf der anderen Seite des genannten Stützkörpers münden, unter Benutzung eines Formwerkzeugs, das zwei Kokillen aufweist, die jeweils eine Vielzahl axialer Fingerr (40) aufweisen, um beiderseits des Stützkörpers den genannten Stützkörper und die genannten Ausnehmungen von der Seite her abzuformen, worin man axial mindestens zum Teil und in Bezug auf den Kern (2) und in Bezug auf den Formgebungsring (5) des Scheitels jede der genannten Kokillen wegbewegt, die axiale Finger aufweisen, bevor man die Ausformausbildung des genannten Kerns herstellt und die genannten Teile des Ringes radial entfernt.

5. Formwerkzeug zum Abformen eines Stützkörpers, der dazu bestimmt ist, auf einer Fahrzeugfelge angebracht zu werden, wobei der genannte Stützkörper eine Drehachse, eine Basis mit einer radial inneren, im wesentlichen zylindrischen Fläche, die dazu bestimmt ist, rund um die genannte Felge angebracht zu werden, einen Scheitel, der dazu bestimmt ist, die Last abzustützen, und einen Körper aufweist, der die genannte Basis mit dem genannten Scheitel verbindet, wobei die genannte Basis eine im wesentlichen undehnbare Umfangsverstärkung aufweist, das genannte Formwerkzeug eine Achse aufweist, die der genannten Drehachse entspricht, das genannte Formwerkzeug einen inneren Kern (2) aufweist, der das Abformen der genannten, radial inneren Fläche sicherstellt, das genannte Formwerkzeug andere Teile aufweist, die zusammen mit dem genannten Kern einen geschlossenen Hohlraum zum Abformen des genannten Stützkörpers bilden, der genannte Kern von mindestens zwei trennbaren Abformteilen (20, 21, 22) gebildet ist, das eine der Teile (21, 22) einen Abformsektor aufweist, der in Umfangsrichtung von einem ersten Rand zu einem zweiten Rand verläuft und zum Teil die Formgebungsfläche der genannten, radial inneren Fläche bildet, der genannte Abformsektor unmittelbar oder mittelbar durch eine Übergangsfläche verlängert ist, die vom genannten ersten Rand zum genannten zweiten Rand verläuft und durch das Innere des Kerns hindurchläuft, die genannte Übergangsfläche einen oder mehrere Bereiche (23, 24) bildet, die die durch eine Gerade erzeugt sind, die zu sich selbst parallel versetzt und unter einem ersten Winkel zur Achse des Formwerkzeugs geneigt wird, die genannten Abformteile imstande sind, eine Formgebungsausbildung einzunehmen, in der die genannten Teile eine in Umfangsrichtung durchgehende Formgebungsfläche bilden, die durch einen Bezugsdurchmesser Φ definiert ist, der im wesentlichen dem Innendurchmesser des genannten Stützkörpers entspricht, und eine Ausformausbildung durch die Gleitbewegung eines Teiles auf einem anderen längs der genannten Übergangsfläche, und die genannte Ausformausbildung eine Länge einer Umhüllung E aufweist, die geringer ist als das Produkt aus der Zahl π und dem Bezugsdurchmesser Φ.

6. Formwerkzeug nach Anspruch 5, worin der genannte Kern mindestens drei starre, trennbare Abformteile aufweist, und der Kern eine Symmetrieachse aufweist, die die genannte Achse des Formwerkzeugs enthält.

7. Formwerkzeug nach Anspruch 5, worin der genannte Kern aus drei starren, trennbaren Formteilen besteht, einem mittleren Teil (20) und zwei komplementären Teilen (21, 22), wobei die genannten drei starren Teile vier benachbarte Formgebungssektoren (A, B, C, D) aufweisen, die die Formgebungsoberflächen der genannten, radial inneren Fläche bilden, das mittlere Teil (20) zwei nichtbenachbarte und diametral gegenüberliegende Abformsektoren (A und C) aufweist, das mittlere Teil zwei Bereiche (23) aufweist, die unter Winkeln mit demselben Wert geneigt und bezüglich der Achse des Formwerkzeugs mit entgegengesetzten Vorzeichen angeordnet sind, die genannten Bereiche in der Verlängerung unmittelbar oder mittelbar die genannten, nicht benachbarten Abformungssektoren sind, und die genannten Bereiche dazu bestimmt sind, mit entsprechenden Bereichen (24) zusammenzuwirken, die im Rücken eines jeden der komplementären Teile (21, 22) derart eingebracht sind, daß eine axiale Bewegung des genannten mittleren Teils eine radiale Bewegung der genannten, komplementären Teile veranlaßt.

8. Formwerkzeug nach Anspruch 5, worin der genannte Kern fünf starre, trennbare Formteile aufweist, einen mittleren Teil (120) und vier komplementäre Teile (121, 122, 123, 124), wobei die genannten vier komplementären Teile vier benachbarte Formgebungssektoren (A, B, C, D) aufweisen, die die Formgebungsoberflächen der genannten, radial inneren Fläche bilden, das mittlere Teil (120) zwei Bereiche (125) aufweist, die unter Winkeln mit demselben Wert geneigt und bezüglich der Achse des Formwerkzeugs mit entgegengesetzten Vorzeichen angeordnet sind, die genannten Bereiche dazu bestimmt sind, mit entsprechenden Bereichen (126) zusammenzuwirken, die im Rücken eines jeden von zwei komplementären Teilen (121, 123) eingebracht sind, und die entsprechenden Bereiche (126) unmittelbar oder mittelbar in der Verlängerung der genannten Abformsektoren derart liegen, daß eine axiale Bewegung des genannten mittleren Teils eine radiale Bewegung der genannten, komplementären Teile (121, 123) veranlaßt.

9. Formwerkzeug nach Anspruch 5, worin der genannte Kern fünf starre, trennbare Formteile aufweist, einen mittleren Teil (220) und vier komplementäre Teile (221, 222, 223, 224), wobei die genannten vier komplementären Teile vier benachbarte Formgebungssektoren (A, B, C, D) aufweisen, die die Formgebungsoberflächen der genannten, radial inneren Fläche bilden, das mittlere Teil (220) zwei Paare von Bereichen (225, 226) aufweist, die für das erste Paar um Winkel +α und -α bezüglich der Achse des Formwerkzeugs und für das zweite Paar um Winkel +β und -β bezüglich der Achse des Formwerkzeugs geneigt sind, die ebenfalls entgegengesetzt sind und einen Wert (β) aufweisen, der bezüglich des Wertes α unterschiedlich ist, die genannten Bereiche dazu bestimmt sind, mit entsprechenden Bereichen (227, 228) zusammenzuwirken, die im Rücken aller komplementären Teile (221, 222, 223, 224) eingebracht sind, und die genannten, entsprechenden Bereiche (227, 228) unmittelbar oder mittelbar in der Verlängerung der genannten Abformsektoren derart liegen, daß eine axiale Bewegung des genannten mittleren Teils eine radiale Bewegung der genannten, komplementären Teile veranlaßt.

10. Formwerkzeug nach einem der Ansprüche 5 bis 9, worin die genannten Bereiche eben sind.

11. Formwerkzeug nach einem der Ansprüche 7 bis 9, worin die Abformsektoren bestimmter der genannten, komplementären Teile eine Vielzahl von Spitzen (25) aufweisen, die radial ausgestülpt sind.

12. Formwerkzeug nach einem der Ansprüche 5 bis 11, worin jeder der Abformsektoren einen Randsteg aufweist, der einen radiale Schulter bildet.

13. Formwerkzeug nach einem der Ansprüche 5 bis 12, in denen die genannten anderen Teile, die mit dem genannten Kern einen geschlossenen Hohlraum bilden, eine Kokille aufweisen, die mit axial ausgerichteten Fingern versehen ist, wobei die Kokille dazu bestimmt ist, von der Seite her den genannten Körper abzuformen, die genannten Finger dazu bestimmt sind, Ausnehmungen im genannten Körper abzuformen, bestimmte der genannten Finger, die Auswerferfinger, in zwei axial trennbaren Teilen hergestellt sind, und der Endteil von seiner Basis abgespreizt werden kann, um das Ausformen des Stützkörpers zu begünstigen.

## Claims

1. A process for manufacturing a support which is intended to be mounted on a vehicle rim, said support having an axis of rotation, a base limited by a substantially cylindrical radially inner face intended to be mounted around said rim, a crown intended to bear the load and a body connecting said base to said crown, said base comprising a substantially inextensible circumferential reinforcement, the radially outer face of said crown having a form which deviates from the cylindrical form, the body comprising a plurality of axial cutouts opening onto at least one side of said support,
said manufacturing process using a mould having an axis corresponding to said axis of rotation, said mould comprising:
- an inner core (2) effecting the moulding of said radially inner face,
- a moulding ring (5) for the crown, said ring comprising at least two parts separable radially one from the other, said separable parts making it possible to mould said radially outer face of said crown,
- at least one shell comprising a plurality of axial fingers (40) for laterally moulding said body and said cutouts, said core, said ring and said shell cooperating to define at least in part a closed cavity for moulding said support,
said core (2) comprising at least two constituent parts (20, 21, 22) and being able to adopt a moulding configuration in which its constituent parts form a circumferentially continuous moulding surface for moulding said radially inner face, the moulding surface being defined by a reference diameter φ corresponding substantially to the internal diameter of said support, said core also being able to adopt a demoulding configuration of a form different from the moulding configuration, defined by an enveloping length E around said moulding surface which is less than the product of the number π and the reference diameter φ, said manufacturing process comprising the following steps:
• prefabricating a ring (90) comprising said circumferential reinforcement,
• establishing the demoulding configuration of said core,
• installing said ring on said core,
• establishing the moulding configuration of said core,
• closing the mould and then delivering an elastic material in the final, injectable state under pressure into said mould,
• axially moving away said shell comprising axial fingers (40), at least partially, relative to at least one of the components, namely the moulding ring and the core,
• then establishing the demoulding configuration of said core and radially moving apart said parts of the moulding ring for the crown,
• removing said support.

2. A process according to Claim 1, in which said substantially inextensible circumferential reinforcement comprises reinforcement cords oriented substantially circumferentially, embedded in a matrix of elastomeric material.

3. A process according to one of Claims 1 or 2, in which, when establishing the moulding configuration, said ring is placed under tension.

4. A process according to one of Claims 1 to 3, for moulding a support comprising a plurality of axial cutouts opening some on one side and the others on the other side of said support, using a mould comprising two shells each comprising a plurality of axial fingers (40) for laterally moulding said body and said cutouts on either side of the support, in which each of said shells comprising axial fingers is moved apart axially, at least in part and relative to the core (2) and relative to the moulding ring (5) of the crown, before establishing the demoulding configuration of said core and radially moving apart said parts of the ring.

5. A mould for the moulding of a support which is intended to be mounted on a vehicle rim, said support having an axis of rotation, a base having a substantially cylindrical radially inner face intended to be mounted around said rim, a crown intended to bear the load and a body connecting said base to said crown, said base comprising a substantially inextensible circumferential reinforcement, said mould having an axis corresponding to said axis of rotation, said mould comprising an inner core (2) moulding said radially inner face, said mould comprising other parts which create with said core a closed cavity for moulding said support, said core being formed by at least two separable moulding parts (20, 21, 22), one of the parts (21, 22) comprising a moulding sector extending circumferentially from a first edge to a second edge and partially defining the moulding surface of said radially inner face, said moulding sector being extended, directly or indirectly, by an interface extending from said first edge to said second edge and passing through the interior of the core, said interface forming one or more bearing surfaces (23, 24) produced by a straight line translated parallel to itself and inclined at a first angle relative to the axis of the mould, said moulding parts being able to adopt a moulding configuration in which said pieces form a circumferentially continuous moulding surface, defined by a reference diameter φ corresponding substantially to the internal diameter of said support, and a demoulding configuration by sliding one part on another part along said interface, said demoulding configuration having an enveloping length E less than the product of the number π and of the reference diameter φ.

6. A mould according to Claim 5, in which said core comprises at least three separable rigid moulding parts, the core comprising a plane of symmetry containing said axis of the mould.

7. A mould according to Claim 5, in which said core is formed of three separable rigid parts: a central part (20) and two complementary parts (21, 22), said three rigid parts having four adjacent moulding sectors (A, B, C, D) constituting moulding surfaces for said radially inner face, the central part (20) having two non-adjacent, diametrically opposed moulding sectors (A and C), the central part comprising two bearing surfaces (23), which are inclined by angles of the same value and of opposite signs relative to the axis of the mould, said bearing surfaces being in the extension, directly or indirectly, of said non-adjacent moulding sectors, said bearing surfaces being intended to cooperate with corresponding bearing surfaces (24) formed on the back of each of the complementary parts (21, 22), such that an axial movement of said central part controls a radial movement of said complementary parts.

8. A mould according to Claim 5, in which said core comprises five separable rigid moulding parts, a central part (120) and four complementary parts (121, 122, 123, 124), said four complementary parts having four adjacent moulding sectors (A, B, C, D) constituting moulding surfaces for said radially inner face, the central part (120) comprising two bearing surfaces (125), which are inclined at angles of the same value and of opposite signs relative to the axis of the mould, said bearing surfaces being intended to cooperate with corresponding bearing surfaces (126) formed on the back of two of the complementary parts (121, 123), said corresponding bearing surfaces (126) being in the extension, directly or indirectly, of said moulding sectors, such that an axial movement of said central part controls a radial movement of said two complementary parts (121, 123).

9. A mould according to Claim 5, in which said core comprises five separable rigid moulding parts, a central part (220) and four complementary parts (221, 222, 223, 224), said four complementary parts having four adjacent moulding sectors (A, B, C, D) constituting moulding surfaces for said radially inner face, the central part (220) comprising two pairs of bearing surfaces (225, 226), inclined for the first pair at angles +α and -α relative to the axis of the mould, and for the second pair at angles +β and -β relative to the axis of the mould, and therefore also opposed and of different value (β) from the value α, said bearing surfaces being intended to cooperate with corresponding bearing surfaces (227, 228) formed on the back of all the complementary parts (221, 222, 223, 224), said corresponding bearing surfaces (227, 228) being in the extension, directly or indirectly, of said moulding sectors, such that an axial movement of said central part controls a radial movement of said complementary parts.

10. A mould according to one of Claims 5 to 9, in which said bearing surfaces are planar.

11. A mould according to one of Claims 7 to 9, in which the moulding sectors of some of said complementary parts comprise a plurality of pins (25) radially forming protuberances.

12. A mould according to one of Claims 5 to 11, in which each of the moulding sectors comprises a flange forming a radial projection.

13. A mould according to one of Claims 5 to 12, in [which] said other parts creating with said core a closed cavity comprise a shell provided with axially oriented fingers, the shell being intended to laterally mould said body, said fingers being intended to mould cutouts in said body, some of said fingers, the ejector fingers, being made in two axially separable parts, the end part being able to be moved away from its base in order to promote the demoulding of the support.
